# EUROPEAN PATENT APPLICATION

(11) **EP 0 993 810 A2**
(43) Date of publication of application: **19.04.2000**
(21) Application number: 99830641.9
(22) Date of filing: 11.10.1999
(51) Int. Cl.: A61C 19/00

(54) **A polymerising lamp control unit**

(30) Priority: 13.10.1998 IT BO980580
(71) Applicant: CASTELLINI S.p.A., I-40013 Castelmaggiore (Bologna) (IT)
(72) Inventor: Castellini, Franco, 40124 Bologna (IT)
(74) Representative: Lanzoni, Luciano

(57) **Abstract**

A control unit for polymerising lamps (1) consists of a control unit (7), which may be independent or part of a dental unit, which controls light generating means (5); said control unit (7) may be programmed in accordance with the power output (P) values of the light generating means (5) and the operating time (T) values of the means (5) at a preset power (P), in accordance with operating parameters which can be preset on the control unit (7), so as to define an operating curve (C) which can be adapted to the operating parameters which emerge each time during treatment.

## Description

The present invention relates to a polymerising lamp control unit, in particular, which can be used on dental devices, such as dental units.

In the sector for auxiliary devices or handpieces for the above-mentioned dental units (built in or independent devices), it is known that polymerising lamps are used by the dental surgeon or assistant for controlling the hardening of ceramic pastes which form dental fillings. The use of such lamps concentrates light on the paste, promoting a catalysing phenomenon within the filling mixture.

These lamps consist of a body which houses light generating means (the main component of which is a halogen bulb). The light is concentrated, filtered and directed into a "tube" defined by a tip made of optic fibres located and connected at one end of the body in such a way as to generate a flow of light, from the tip, which is concentrated in a given direction and has a constant power, according to the characteristics of the light source.

In the operations carried out with such lamps, the stage to be controlled is currently the polymerising treatment time of the lamp on the pastes. Said stage causes a change in the state of the product, with a consequent change in the surface of the paste on the filling.

Most pastes used for dental fillings have a surface which shrinks during polymerisation (due to the above-mentioned change of state). However, the surface must perfectly fill a cavity in a tooth being treated, otherwise, excessive shrinkage of the paste may lead to infiltration of or openings in the cavity in the tooth, with significant risk of new decay. Therefore, to reduce said risks of infiltration in the fillings to a minimum, dental surgeons use a method which envisages the creation of small successive layers of paste, in precise doses and subjected to precision polymerisation.

However, this method is not effectively supported by current controls applied to the lamps, which are not always suited to operating and ambient situations, the type of paste and the weight used, the distance between the tip and the paste to be polymerised (that is to say, the depth of the tooth cavity or the precision demonstrated by the dental surgeon in keeping the tip at a constant distance from the paste).

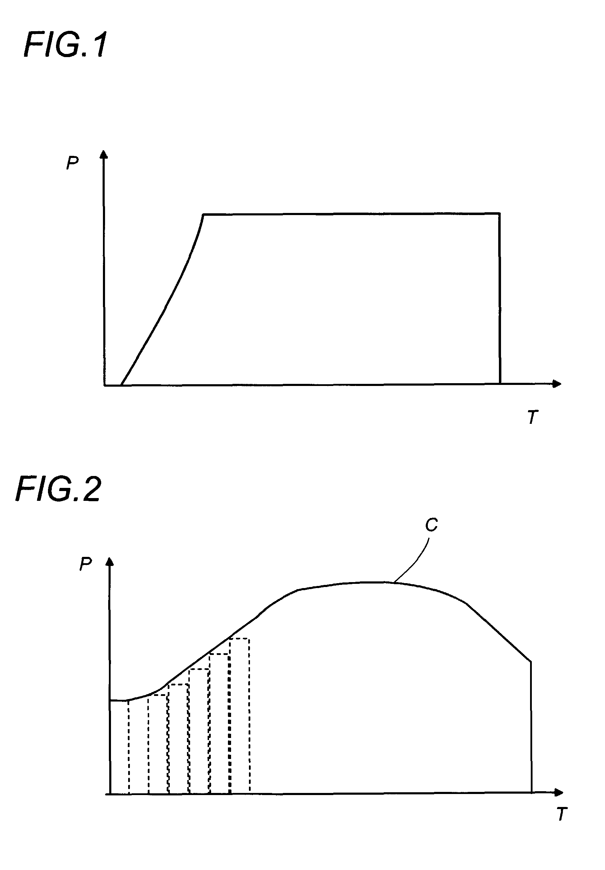

As illustrated by the graph in Figure 1, the current control is based solely on the time variable, maintaining a constant power output. In other words, the lamp ON/OFF state is controlled.

However, the constant power output of the lamp does not improve treatment of the pastes and, for the above-mentioned reasons, there may be, for example: treatments with a significant distance separating the lamp and paste (polymerisation is slow and incomplete), or treatments with the lamp and paste very close together (treatment is too rapid, with a high level of paste shrinkage in the cavity).

In order to overcome this disadvantage, the Applicant has combined the polymerising lamp with a control unit which makes use of the lamp extremely flexible thanks to different programming of its operation, that is to say, adjusting both the operating time and the power output, so as to optimise each polymerising treatment according to the current operating situation.

The technical features of the present invention, in accordance with the above aims, are apparent in the claims herein, and the advantages are more clearly described in the detailed description below, with reference to the accompanying drawings, which illustrate a preferred embodiment of the invention, without limiting the scope of its application, and in which:
Figure 1 is a power / time graph relative to the operation of a polymerising lamp of the known type;
Figure 2 is a power / time graph which can be obtained with the aid of a polymerising lamp control unit made in accordance with the present invention;
Figures 3 is a side view with some parts illustrated in a block diagram, of a polymerising lamp control unit made in accordance with the present invention;
Figure 4 is a scaled up schematic side view with some parts cut away to better illustrate others, of part of the end tube of the polymerising lamp illustrated in the previous figure close to a dental cavity;
Figure 5 is a schematic perspective view with some parts cut away to better illustrate others, of the end section of the tube on the lamp used for reading the identification codes of filling pastes.

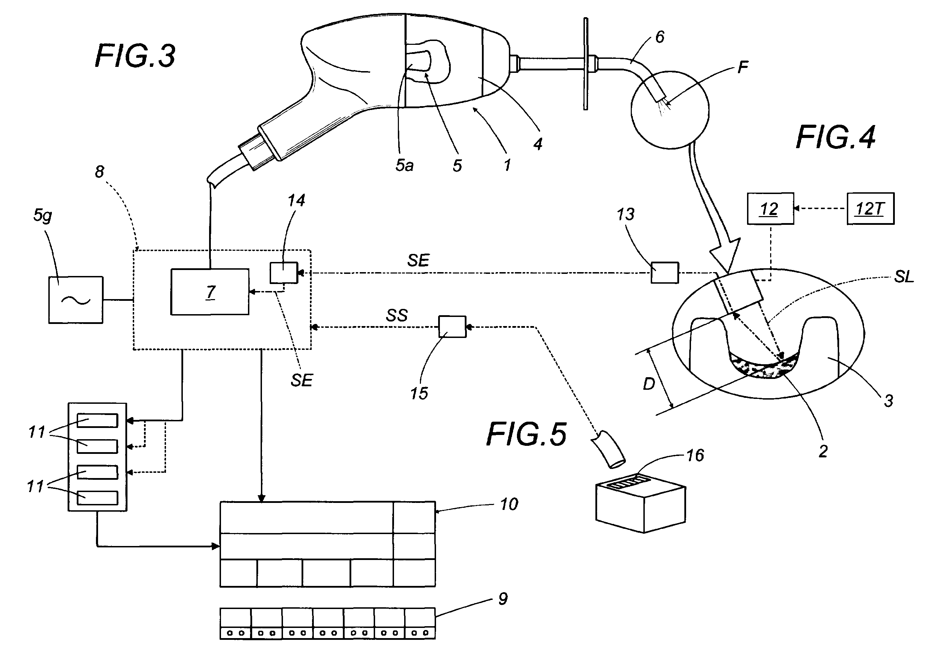

With reference to the accompanying drawings, and in particular Figure 3, the unit disclosed allows the control of polymerising lamps 1 used, in particular, in dental surgeries.

These polymerising lamps 1 are used for hardening pastes 2 used to fill cavities in teeth 3 (see Figure 4).

The polymerising lamp 1 (again see Figure 3) consists of a body 4 which houses light generating means 5 (normally consisting of a halogen bulb 5a powered by the mains 5g), whose light is directed into a tube 6 consisting of optic fibres in such a way as to generate a light flow F directed towards the outside of the tube 6.

The lamp 1 control unit may be an independent element, which can be used when required, as an addition to the devices present in the surgery, or may be an element built into the dental unit (of the known type and, therefore, not illustrated) and the main device in the surgery.

The control unit comprises a unit 7 for controlling the light generating means 5, the unit 7 being programmable according to the bulb 5a power output P and the bulb 5a operating time T values at a preset power P. This programming is carried out in accordance with operating parameters which may be preset on the control unit 7, so as to define an operating curve C (a preferred embodiment of which is illustrated in Figure 2) which can be adapted to the above-mentioned operating parameters.

The operating parameters are those elements involved in the polymerising stage. The power output P and operating time T values are set on the control unit 7 in accordance with at least the type of paste 2 (in particular the time factor) used for the filling and the distance D envisaged between the paste 2 used and the end of the tube 6 (power factor).

In a preferred embodiment, the unit 7 disclosed may be used with the aid of the very latest dental units, which have a processing unit or microprocessor 8 for monitoring all circuits and operating parts on the dental unit.

In this specific case, the control unit 7 could be part of the microprocessor 8, which can store the operating parameters involved and the power output P and time T values which can be set in accordance with the operating parameters.

These values and the relative curves may be viewed on a display 10 with the aid of a console 9 activated by the dental surgeon. The display normally shows the function data for various devices on the dental unit, including the lamp 1 data (for further details, refer to patent application EP - 750.889 by the Applicant).

For more complete operation, the microprocessor 8 may have memory banks 11 (again see Figure 3) designed to allow the storage and display of a plurality of combinations of values of the power output P and the time T used according to corresponding, different operating parameters during treatment.

As already indicated, one of the parameters to be controlled in order to optimise the lamp 1 operating curve is the distance between the tube 6 and the paste 2 during treatment. This parameter may be controlled using the lamp 1 structure, that is to say, by fitting the lamp, see Figure 4, with means 12 for supplying a reference light signal SL and means 13 for detecting the light signal SL at a reference surface defined by the paste 2 in the filling. These means 12 and 13 may be advantageously fitted on the tube 6 for greater precision in the emission of the light signal and its detection.

The detector means 13 are also fitted with comparison and calculation means 14, designed to send a signal SE, equivalent to the distance D between the tube 6 and the surface 2, to the control unit 7 or the microprocessor 8 which, in turn, and according to the signal SE, can adapt the power / time operating curve C to variations in the distance D originally set.

Obviously, if the microprocessor 8 is present, the comparison and calculation means 14 may be part of the microprocessor, which stores the distance D parameters set at the start of the treatment.

The means 12 which supply the light signal SL preferably envisage timer means 12T designed to allow the light signal to be transmitted for set periods of time and co-ordinated with the activation of the detector means 13, so that it does not interfere too much with the flow of light F from the tube 6.

The other parameter necessary for adapting and optimising the lamp operating curve C is the type of paste 2 which can be used and, therefore, the optimum treatment time.

For this type of parameter, the time recommended by the manufacturer may be entered manually or, alternatively, the control unit 7 may be fitted with means 15 for reading an identification code 16 (for example, known bar codes) for the type of paste 2 used and which contain the necessary data for correct use of the paste.

The means 15 record the data and send a signal SS for selection of a basic power / time operating curve C, which may already be stored by the unit or microprocessor 8. The reading means 15 may consist of the lamp 1 itself, that is to say, they may use the optic fibre tube 6 as a source of light and for reading.

A unit thus configured fulfils the stated aims, thanks to a system for the control of operating parameters deriving from the type of treatment carried out. In this way, the treatment is customised according to the type of paste used, the distance envisaged between the paste and the lamp, and even the precision of the dental surgeon who carries out the treatment.

Basically, thanks partly to the feedback controls allowed by the control unit or microprocessor, use of the lamp is more flexible, in particular as regards the power output. This tends to optimise polymerisation of the paste, even during real time treatment, with positive effects on the final filling obtained.

The invention described can be subject to modifications and variations without thereby departing from the scope of the inventive concept.

Moreover, all the details of the invention may be substituted by technically equivalent elements.

## Claims

1. A polymerising lamp control unit, the lamps (1) used, in particular, in dental surgeries for hardening pastes (2) used for filling cavities in teeth (3); the polymerising lamp (1) consisting of a body (4) housing light generating means (5), the light being directed into a tube (6) consisting of optic fibres so as to generate a light flow (F) directed towards the outside of the tube (6), the control unit being characterised in that the light generating means (5) are controlled by a control unit (7) which can be programmed according to power output (P) values of the light generating means (5) and operating time (T) values of the means (5) at a preset power (P) according to the operating parameters which can be preset on the control unit (7) in such a way as to define an operating curve (C) which can be adapted to the above-mentioned operating parameters.

2. The control unit according to claim 1, characterised in that the power output (P) and operating time (T) values are set on the control unit (7) in accordance with the operating parameters selected at least from the type of paste (2) used for the filling and the distance (D) envisaged between the paste (2) used and the tube (6).

3. The control unit according to claim 1, in which the dental surgery has a dental unit with a processing unit or microprocessor (8) for monitoring the dental unit, the control unit being characterised in that the control unit (7) is part of the microprocessor (8), being designed to store the operating parameters and the power output (P) and time (T) values which can be set in accordance with the operating parameters.

4. The control unit according to claim 3, in which the processing unit or microprocessor (8) has a console (9) which activates a display (10) for constantly viewing the function data, the control unit being characterised in that the microprocessor (8) has memory banks (11) designed to allow the storage and viewing of a plurality of combinations of said power output (P) and operating time (T) values according to corresponding, different operating parameters.

5. The control unit according to one of the foregoing claims, characterised in that, on the tube (6), the lamp (1) has means (12) for supplying a reference light signal (SL) and means (13) for detecting the light signal (SL) at a reference surface, that is to say, on the paste (2); the detector means (13) having comparison and calculation means (14) designed to send a signal (SE), equivalent to the distance (D) between the tube (6) and the surface, to the control unit (7) or microprocessor (8), the latter being designed to adapt the power / time operating curve (C) according to the signal (SE).

6. The control unit according to claim 5, characterised in that the means (12) for supplying a light signal (SL) comprise timer means (12T) designed to send the light signal according to preset periods of time in co-ordination with the detector means (13).

7. The control unit according to claim 1, characterised in that the control unit (7) has means (15) for reading a paste (2) identification code (16) and sending a signal (SS) for selecting a power / time operating curve (C).

8. The control unit according to claim 7, characterised in that the reading means (15) consist of the lamp (1), using the optic fibre tube (6) as the reading light source.

9. A dental unit equipped with at least a polymerising lamp (1) which can be used for hardening pastes (2) for filling cavities in teeth (3); the polymerising lamp (1) consisting of a body (4) housing light generating means (5), the light being directed into a tube (6) consisting of optic fibres so as to generate a light flow (F) directed towards the outside of the tube (6), the dental unit being characterised in that one of its components is a unit (7) for controlling the light generating means (5), it being possible to programme said unit according to power output (P) values of the light generating means (5) and operating time (T) values of the means (5) at a preset power, according to operating parameters which can be preset on the control unit (7) in such a way as to define an operating curve (C) which can be adapted to the above-mentioned operating parameters.
